Europäisches Patentamt

European Patent Office

Office européen des brevets

(19)

(11) Veröffentlichungsnummer: **0 006 250**
**B1**

(12) **EUROPÄISCHE PATENTSCHRIFT**

(45) Veröffentlichungstag der Patentschrift:
26.08.81

(51) Int. Cl.³: **B 62 D 55/12, F 16 H 55/30**

(21) Anmeldenummer: **79200123.2**

(22) Anmeldetag: **12.03.79**

(54) **Triebkranzverzahnung.**

(30) Priorität: 27.04.78 DE 2818409
04.11.78 DE 2847932

(43) Veröffentlichungstag der Anmeldung:
**09.01.80 Patentblatt 80/1**

(45) Bekanntmachung des Hinweises auf die Patenterteilung:
**26.08.81 Patentblatt 81/34**

(84) Benannte Vertragsstaaten:
**DE FR GB IT SE**

(56) Entgegenhaltungen:
**CH-A-411 478**
**FR-A-1 079 224**
**US-A-2 365 544**
**US-A-3 504 562**
**US-A-3 916 708**

(73) Patentinhaber: **Rheinmetall GmbH, Ulmenstrasse 125, D-4000 Düsseldorf (DE)**

(72) Erfinder: **Marwitz, Hartmut, Dr., Füsilierstrasse 1, D-4000 Düsseldorf (DE)**

(74) Vertreter: **Behrens, Ralf Holger, Dipl.-Phys., in Firma Rheinmetall GmbH Ulmenstrasse 125 Postfach 6609, D-4000 Düsseldorf 1 (DE)**

EP 0 006 250 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

## Triebkranzverzahnung

Die Erfindung betrifft eine Triebkranzverzahnung für Kettentriebe mit sich unter Last elastisch dehnenden Ketten, insbesondere Gleisketten für Gleiskettenfahrzeuge mit in Rohrkörpern elastisch gelagerten Kettenbolzen, die mittels Verbindern miteinander verbunden sind, bei der die Zähne der Triebkranzverzahnung auf dem Triebkranz elastisch verschiebbar angeordnet sind.

Bei derartigen Kettentrieben haben die Triebkränze die Aufgabe, ein Drehmoment über die Triebkranzverzahnung in einen Zug der Kette umzuwandeln. Aufgrund der Elastizität der Kette verändert sich die Teilung der Kettenabschnitte, die durch den Triebkranz gespannt werden. Diese Längung ist kraftabhängig und bewirkt im Betrieb einen Teilungsunterschied zwischen der Triebkranzverzahnung und der Kette, wodurch Schwierigkeiten beim Eingriff der Kette mit der Triebkranzverzahnung auftreten und die Gefahr besteht, dass die Kette beim Umlaufen um den Triebkranz an den Zahnflanken hochwandert und abgeworfen wird. Diese Schwierigkeiten gelten insbesondere für die Gleisketten von Gleiskettenfahrzeugen und deren Triebkränze.

Üblicherweise werden die Triebkränze massiv aus Stahlplatten ausgearbeitet, wobei die Zähne eine konstante Teilung aufweisen. Die Gleisketten moderner Bauart werden üblicherweise als Verbinderketten ausgeführt, wobei zwischen den Kettenbolzen und dem Rohrkörper spaltfüllende Gummieinlagen vorgesehen sind, die die Winkelbewegung der Gleiskette beim Umlaufen um den Triebkranz ohne gleitende oder rollende Reibung ermöglichen. Im Ruhezustand weisen die Kettenglieder eine konstante Teilung auf. Wird nun die Kette durch den Triebkranz gespannt, so verändert sich die Teilung der Kettenabschnitte, die unter Spannung stehen, aufgrund der Längselastizität der Kette, die vor allem durch die Gummieinlage zwischen Bolzen und Rohrkörper verursacht wird. Die Längung der Kette ist kraftabhängig und wird bestimmt durch die nichtlineare Federkennlinie des gesamten Kettensystems.

In der Praxis wird die Teilung des Triebkranzes entweder an den mittleren oder an den maximalen Kettenzug angepasst. Dennoch besteht bei den bekannten Triebkränzen für Gleisketten die Gefahr, dass in bestimmten Betriebszuständen die Kette – wie schon erwähnt – beim Umlaufen um den Triebkranz an den Zahnflanken hochwandert und abgeworfen wird. Neben der damit verbundenen Unfallgefahr, ergibt sich für bestimmte Kettentypen eine unzulässige hohe Biegebeanspruchung des Kettenbolzens. Zudem überträgt nur jeweils ein Kettenglied und ein Zahn der Triebkranzverzahnung den gesamten Kettenzug, so dass hierdurch Beanspruchungsspitzen entstehen, die dimensionierungsbestimmend sind und zu einer sehr schweren Ausführung der Gleiskette und der Triebkränze führen.

Aus der US-A-2 365 544 ist eine Triebkranzverzahnung mit auf dem Triebkranz elastisch verschiebbar angeordneten Zähnen bekannt, bei der jeder Zahn einen in einer Ausnehmung des Triebkranzes angeordneten gummiummantelten Schaft aufweist. Um Geräusch und Abnutzung zu reduzieren, sind die Zähne drehbar gelagert, so dass die Zahnspitzen bei Belastung in Umfangsrichtung des Zahnkranzes nachgeben können.

Aufgabe der vorliegenden Erfindung ist es, die aufgeführten Nachteile zu vermeiden und eine Triebkranzverzahnung zu schaffen, die einen besseren Eingriff der Triebkranzverzahnung mit der Kette unter allen Belastungszuständen zu erreichen gestattet, so dass ein Aufwandern an den Zahnflanken und ein Abwerfen der Kette verhindert wird, wobei zusätzlich eine Verteilung der Eingriffskräfte auf mehrere Zähne der Triebkranzverzahnung erreicht werden soll, um die Belastungsspitzen abzubauen.

Diese Aufgabe wird durch die Merkmale der Ansprüche 1 und 5 gelöst.

Durch die Erfindung kann sich die Teilung der Triebkranzverzahnung aufgrund der eingebauten Elastizität den verschiedensten Lastzuständen optimal anpassen, so dass ein gleichmässigeres Tragen der Gleiskettenglieder auf dem Triebkranz erreicht wird. Das Beanspruchungsniveau aller sich im Eingriff befindlichen Teile, sowohl des Triebkranzes als auch der Kette, wird herabgesetzt. Die Ketten bestimmter Bauart können sich aufgrund der zusätzlichen vorhandenen radialen Elastizität der Triebkranzverzahnung beim Umlauf um den Triebkranz auf der Triebkranztrommel abstützen. Der Einlaufstoss der Kette in die Triebkranzverzahnung wird vermindert, so dass eine grössere Laufruhe des gesamten Systems erreicht wird.

Mit einer Triebkranzverzahnung entsprechend der vorliegenden Erfindung wird die Gefahr des Auflaufens und Abwerfens der Kette vermindert und der Verschleiss der Triebkranzverzahnung herabgesetzt.

Weitere Einzelheiten und Vorteile ergeben sich aus der nachstehenden, anhand mehrerer in der Zeichnung dargestellter Ausführungsbeispiele gegebenen Beschreibung und es zeigen:

Fig. 1 ein erstes Ausführungsbeispiel für eine elastische Lagerung eines Zahnes im Triebkranz,

Fig. 2 eine Seitenansicht des Zahnes gem. Fig. 1,

Fig. 3 eine Draufsicht auf den Zahn, teilweise im Schnitt gemäss Fig. 1,

Fig. 4 eine Seitenansicht eines Triebkranzes gemäss einer anderen Ausführungsform,

Fig. 5 eine Vorderansicht, teilweise im Schnitt des Triebkranzes gemäss Fig. 4,

Fig. 6 eine Seitenansicht eines Triebkranzes gemäss einer weiteren Ausführungsform,

Fig. 7 eine ausschnittsweise Schnittdarstellung des Triebkranzes gemäss Fig. 6,

Fig. 8 eine ausschnittsweise Seitenansicht der Verbindung zwischen Einzeltriebkränzen und Grundkranz,

Fig. 9 eine weitere Ausführungsform der Verbindung zwischen Einzeltriebkränzen und Grundkranz,

Fig. 10 eine dritte Ausführungsform der Verbindung zwischen Einzeltriebkränzen und Grundsatz,

Fig. 11 eine vierte Ausführungsform der Verbindung der Einzeltriebkränze mit dem Grundkranz,

Fig. 12 eine ausschnittsweise Schnittdarstellung der Fig. 10 mit einer zusätzlichen Verbindung zwischen den einzelnen Triebkränzen.

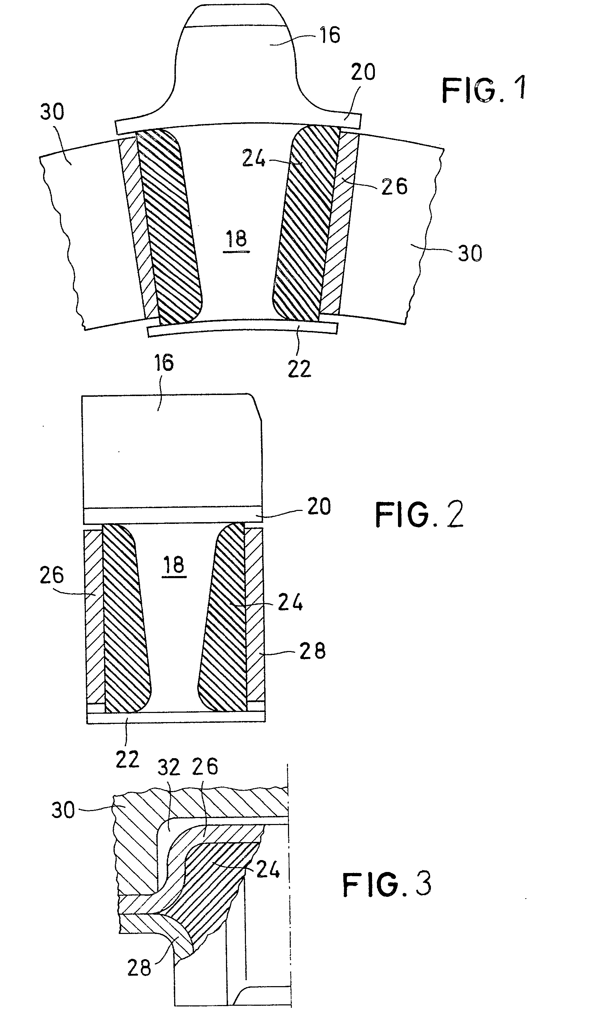

Bei der Ausführungsform gemäss Fig. 1 bis 3 sind einzelne Zähne 16 elastisch auf einer Triebkranztrommel 30 gelagert. Die Zähne 16 sind mit einer radial nach innen gerichteten Verlängerung in Form eines Schaftes 18 versehen, an den eine Gummiummantelung 24 anvulkanisiert ist. In Umfangsrichtung ist jeder Zahn 16 mit Vorsprüngen 20 versehen, welche die Gummiummantelung 24 überdecken. Am freien Ende des Schaftes 18 ist ein Flansch 22 vorgesehen, welcher die Gummiummantelung 24 nach unten abdeckt. Der Schaft 18 ist nach unten sich konisch verjüngend ausgebildet, um mögliche radial wirkende Kräfte von der Kette besser auf die Triebkranztrommel 30 übertragen zu können. Eine Auswechselbarkeit der Zähne 16 ist dadurch gewährleistet, dass die Triebkranztrommel 30 Ausnehmungen 32 aufweist, in die entsprechend ausgebildete Auswölbungen eines Triebkranzringes 26 eingreifen. Ein zweiter entsprechend ausgebildeter Triebkranzring 28 wird gegen den Triebkranzring 26 gelegt, so dass der Zahn 16 mit dem gummiummantelten Schaft 18 durch die Triebkranzringe 26, 28 eingeklemmt und festgehalten wird.

Die Breite der Zähne 16, die Länge der Vorsprünge 20 und die Abmessungen des Flansches 22 sind so gewählt, dass zumindest die Ober- und Unterkanten der Triebkranzringe 26, 28 überdeckt sind, so dass die Gummiummantelung 24 geschützt ist und bei einer evtl. Zerstörung dieser Gummiummantelung 24 die Zähne 16 nicht wegfliegen können. Wenigstens der äussere Triebkranzring 28 kann auf dem Umfang geteilt ausgeführt sein, so dass die Möglichkeit besteht, einzelne, beschädigte Zähne 16 auszuwechseln, ohne dass der gesamte Triebkranz demontiert oder die Gleiskette abgenommen werden müsste. Für eine einwandfreie Wirkungsweise der elastisch gelagerten Zähne 16 ist das Volumen der Gummiummantelung 24 sowie der zwischen den Triebkranzringen 26, 28 gebildeten Ausnehmung so zu wählen, dass das freie Volumen von der Gummiummantelung 24 vollständig ausgefüllt wird. Zusätzlich ist es von Vorteil, wenn die Gummiummantelung 24 auch den Flansch 22 und die Vorsprünge 20 vollständig bedeckt bzw. beim Verspannen der Triebkranzringe 26, 28 sich in die Schlitze zwischen dem Fuss des Zahnes 16, den Vorsprüngen 20, dem Flansch 22 und den Triebkranzringen 26, 28 presst, so dass ein gewisser Formschluss auch in axialer Zahnrichtung erhalten wird. Die so gelagerten Zähne 16 führen unter der Belastung eine begrenzte Bewegung aus, die aus einer Kippbewegung und einer Translationsbewegung in tangentialer Richtung besteht. Dadurch verändert sich örtlich die Teilung der Triebkranzverzahnung und passt sich der Kettendehnung und der Belastung an. Die möglichen Formänderungen werden durch freie Öffnungen des Gummis, ihre örtliche Verteilung, die Härte des Gummis und durch den Füllgrad bestimmt. Die Bewegung der Zähne 16 wird durch die Berührung der Vorsprünge 20 und des Flansches 22 mit den Triebkranzringen 26, 28 begrenzt und bilden somit Anschläge für die Endlage, wobei die Spaltbreite zwischen den Vorsprüngen 20, dem Flansch 22 und den Triebkranzringen 26, 28 die maximal mögliche Verschiebung der Zähne 16 festlegt.

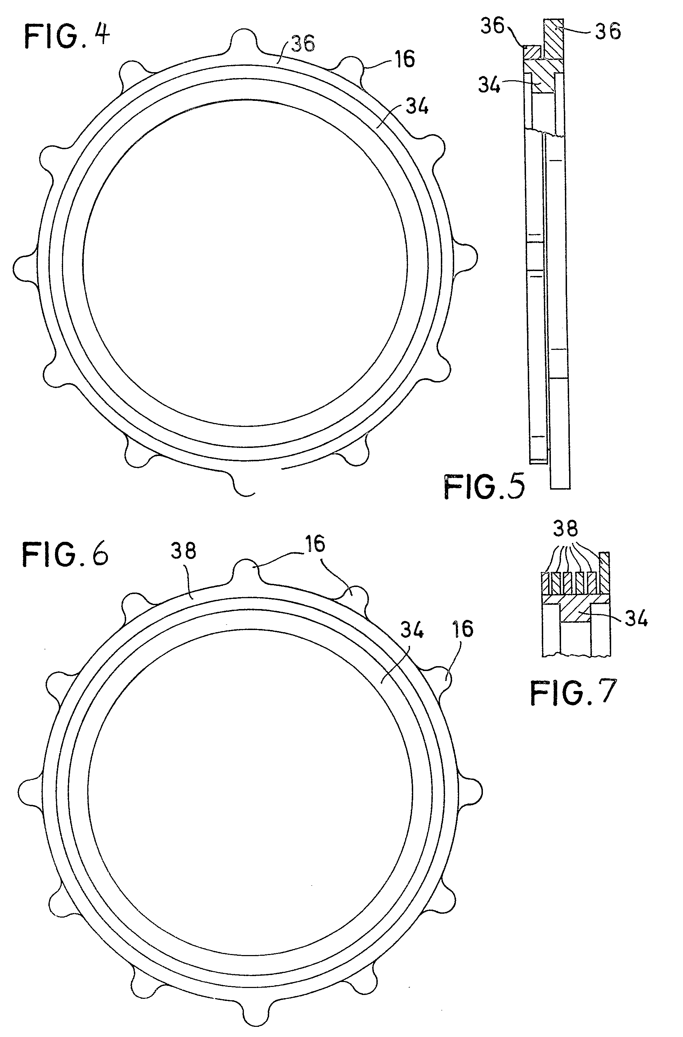

Bei den Ausführungsformen gemäss Fig. 4 bis 12 ist ein glattflächiger Grundkranz 34 vorgesehen, auf den gemäss Fig. 4 mindestens zwei Einzeltriebkränze 36 gelegt sind, die jeweils mit der Hälfte der Gesamtzähnezahl versehen sind, so dass die Teilung der Zähne 16 das Doppelte der Kettenteilung beträgt.

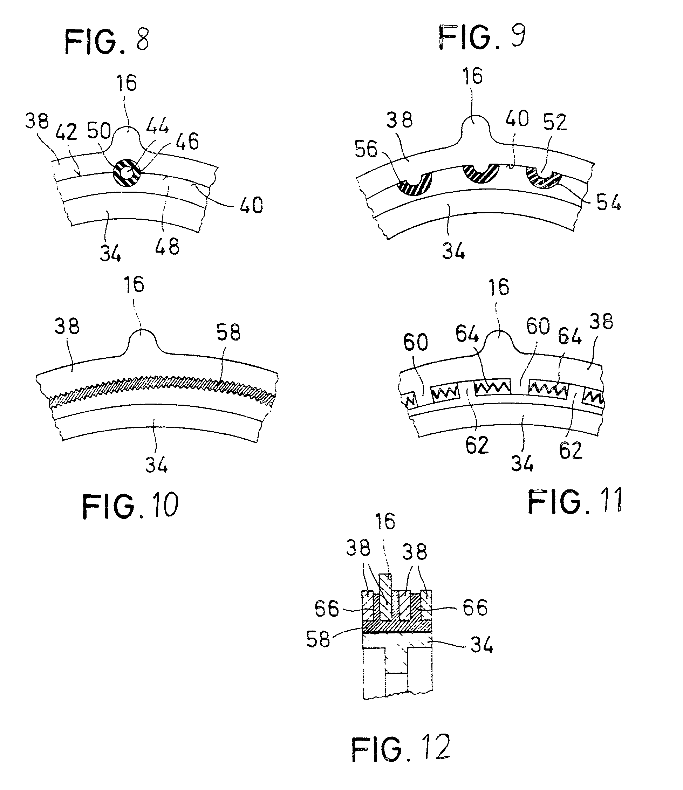

Aufgrund der in Fig. 8 bis 12 dargestellten elastischen Lagerung der Einzeltriebkränze 36 kann sich die Teilung der Zähne 16 auf die Belastung und die damit verbundene Kettenlängung einstellen, so dass die Eingriffsverhältnisse stets der Belastung angepasst sind und ein Abspringen der Kette verhindert wird. Bei der Ausführungsform gem. Fig. 6 und 7 sind sechs Einzeltriebkränze 38 vorgesehen, so dass bei einer Gesamtzähnezahl von insgesamt zwölf Zähnen auf dem Triebkranz jeweils nur zwei Zähne 16 auf dem Einzeltriebkranz 38 angeordnet sind. Hierdurch ist jeweils nur ein Zahn eines Einzeltriebkranzes 38 durch den Kettenzug belastet, so dass es bei dieser Ausführungsform möglich ist, dass die Zahnteilung über dem Umfang des Triebkranzes abnimmt bzw. zunimmt, entsprechend der über den Umfang des Triebkranzes abnehmenden Kettenlängung.

Verschiedene Möglichkeiten der elastischen Lagerung der Einzeltriebkränze 36 bzw. 38 sind in den Fig. 8 bis 12 dargestellt. Gemäss Fig. 8 sind die Einzeltriebkränze 38 mit geringem Spiel auf dem Grundkranz 34 gelagert, wobei die Innenfläche 40 der Einzeltriebkränze 38 und die Aussenfläche 42 des Grundkranzes 34 eine Trennfuge 48 bilden, in deren Ebene Querbohrungen 50 vorgesehen sind, in die mit einer Gummiummantelung 46 versehene Querbolzen 44 eingetrieben sind.

Die Ausführungsform gem. Fig. 9 weist auf der Innenfläche 40 der Einzeltriebkränze 38 Vorsprünge 52 auf, die in entsprechende, mit einer Gummiauskleidung 56 versehene Ausnehmungen 54 eingreifen. Bei den Ausführungsformen gem. Fig. 8 und 9 ist die elastische Verschiebbarkeit der Einzeltriebkränze 38 gegenüber dem Grundkranz 36 somit durch die Verformbarkeit der Gummiummantelung 46 bzw. der Gummiauskleidung 56 gegeben. Selbst wenn die Gummiummantelung 46 bzw. die Gummiauskleidung 56 zerstört sein sollte, ist ein Durchrutschen der Einzeltriebkränze nicht möglich. Die Ausführungsform gemäss Fig. 10 weist zwischen den Einzeltriebkränzen 38 und dem Grundkranz 34 eine einvulkanisierte Gummischicht 58 auf, wobei zur Verbesserung der Haftung die Innenflächen 40 der Einzeltriebkränze 38 und die Aussenfläche 42 des Grundkranzes 34 aufgerauht sein kann. Bei dieser Ausführungsform ist zwar eine Sicherheit gegen Durchrutschen eines Einzeltriebkranzes 38 bei Zerstörung der Gummischicht 58 nicht gegeben, jedoch ist die Beanspruchung der Einzeltriebkränze 38, wenn gem. Fig. 12 mindestens vier Einzeltriebkränze 38 vorgesehen sind und zusätzlich eine einvulkanisierte Gummischicht 66 zwischen den Einzeltriebkränzen 38 vorgesehen ist, geringer, so dass eine Zerstörung der Gummischichten 58 und 66 unwahrscheinlich ist.

Eine rein mechanische, elastische Verbindung zwischen den Einzeltriebkränzen 38 und dem Grundkranz 34 ist in Fig. 11 dargestellt. Bei dieser Ausführungsform weisen die Einzeltriebkränze 38 radiale, nach innen gerichtete Vorsprünge 60 auf, während der Grundkranz 34 mit entsprechenden, radial nach aussen gerichteten Vorsprüngen 62 versehen ist. Diese Vorsprünge 60, 62 greifen ineinander und in die Zwischenräume sind als elastische Elemente zylindrische Schraubenfedern 64 angeordnet.

## Patentansprüche

1. Triebkranzverzahnung für Kettentriebe mit sich unter Last elastisch dehnenden Ketten, insbesondere Gleisketten für Gleiskettenfahrzeuge mit in Rohrkörpern elastisch gelagerten Kettenbolzen, die mittels Verbindern miteinander verbunden sind, bei der die Zähne (16) der Triebkranzverzahnung auf dem Triebkranz (30) elastisch verschiebbar angeordnet sind und bei der jeder Zahn (16) einen in einer entsprechenden Ausnehmung (32) des Triebkranzes (30) angeordneten gummiummantelten Schaft (18) aufweist, dadurch gekennzeichnet, dass sich der Schaft (18) vom Fuss des Zahns (16) radial einwärts erstreckt und dass die Breite des Zahns (16) mindestens so gross ist wie diejenige der Ausnehmung (32), dass am Zahnfuss in Umfangsrichtung Vorsprünge (20) vorgesehen sind, die die Ausnehmung (32) abdecken und dass am freien Ende des Schaftes (18) ein die Ausnehmung (32) abdeckender Flansch (22) vorgesehen ist.

2. Triebkranzverzahnung nach Anspruch 1, dadurch gekennzeichnet, dass der Schaft (18) sich zu seinem freien Ende hin verjüngt.

3. Triebkranzverzahnung nach einem der Ansprüche 1, 2, dadurch gekennzeichnet, dass zur leichten Auswechselbarkeit der Zähne (16) der Triebkranz (30) trommelförmig ausgebildet ist und die Ausnehmungen (32) als Radialnuten ausgebildet sind, in die entsprechend ausgebildete Auswölbungen eines ersten seitlich angeschraubten Triebkranzringes (26) eingreifen, und dass ein zweiter seitlich angeschraubter Triebkranzring (28) vorgesehen ist, der in Zusammenwirken mit dem ersten Triebkranzring (26) die Zähne (16) einklemmt und festhält.

4. Triebkranzverzahnung nach Anspruch 3, dadurch gekennzeichnet, dass die Triebkranzringe (26, 28) mehrteilig ausgebildet sind.

5. Triebkranzverzahnung für Kettentriebe mit sich unter Last elastisch dehnenden Ketten, insbesondere Gleisketten für Gleiskettenfahrzeuge mit in Rohrkörpern elastisch gelagerten Kettenbolzen, die mittels Verbindern miteinander verbunden sind, bei der die Zähne (16) der Triebkranzverzahnung auf dem Triebkranz (34) elastisch verschiebbar angeordnet sind, dadurch gekennzeichnet, dass mindestens zwei elastisch verschiebbar auf einem Grundkranz (34) nebeneinander angeordnete Einzeltriebkränze (36, 38) vorgesehen sind, und dass die Zähne (16) in Umfangsrichtung abwechselnd auf nur je einem der Einzeltriebkränze (36, 38) angeordnet sind.

6. Triebkranzverzahnung nach Anspruch 5, dadurch gekennzeichnet, dass die Einzeltriebkränze (36, 38) mit ihrer Innenfläche (40) auf einer entsprechenden Aussenfläche (42) des Grundkranzes (34) gelagert sind und dass gummiummantelte Querbolzen (44) in auf der Trennfuge (48) zwischen den Einzeltriebkränzen (36, 38) und dem Grundkranz (34) angeordnete Bohrungen (50) eingepresst sind.

7. Triebkranzverzahnung nach Anspruch 5, dadurch gekennzeichnet, dass die Einzeltriebkränze (36, 38) auf ihrer Innenfläche (40) Vorsprünge (52) aufweisen, die in entsprechende, mit Gummi (56) ausgekleidete Ausnehmungen (54) des Grundkranzes (34) eingreifen.

8. Triebkranzverzahnung nach Anspruch 5, dadurch gekennzeichnet, dass zwischen den Innenflächen der Einzeltriebkränze (38) und dem Grundkranz (34) eine einvulkanisierte Gummischicht (58) angeordnet ist.

9. Triebkranzverzahnung nach Anspruch 5, dadurch gekennzeichnet, dass die Einzeltriebkränze (36, 38) und der Grundkranz (34) radiale, ineinandergreifende Vorsprünge (60, 62) aufweisen, zwischen denen in Umfangsrichtung elastische Elemente (64) angeordnet sind.

10. Triebkranzverzahnung nach einem der Ansprüche 5 bis 9, dadurch gekennzeichnet, dass zwischen den Einzeltriebkränzen (36, 38) einvulkanisierte Gummischichten (66) angeordnet sind.

## Patent Claims

1. Driving rim gear for chain drives, with chains expanding elastically under a load, chain tractors for track laying vehicles, with chain bolts elastically mounted in tubular structures and interconnected by connecting devices, wherein the teeth 16 of the driving rim gear are mounted in an elastically displaceable manner on the driving rim 30 and each tooth 16 has a rubber-encased shank 18 positioned in an appropriate recess 32 of the driving rim 30, characterized by the fact that the shank 18 extends radially inwards from the foot of the tooth 16 and that the width of the tooth 16 is at least as great as that of the recess 32 and that the foot of the tooth is provided, in the peripheral direction, with projections 20 which cover the recess 32, and that the free end of the shank 18 bears a flange 22 which covers the recess 32.

2. Driving rim gear in accordance with Claim 1, characterized by the fact that the shank 18 tapers in the direction of its free end.

3. Driving rim gear in accordance with one of Claims 1, 2, characterized by the fact that to ensure easy interchangeability of the teeth 16 the driving rim is drum-shaped and the recesses 32 take the form of radial grooves engaged by the correspondingly designed protuberances of a first driving rim ring 26 screwed onto the side and that a second driving rim ring 28 screwed onto the side is provided and clamps and secures the teeth 16 by interacting with the first driving rim ging 26.

4. Driving rim gear in accordance with Claim 3, characterized by the fact that the driving rim rings 26, 28 are of multipart construction.

5. Driving rim gear for chain drives with chains elastically expanding under load, particularly chain tractors for track laying vehicles, with chain bolts elastically mounted in tubular structures interconnected by means of connecting devices, wherein the teeth 16 of the driving rim gear are mounted in an elastically displaceable manner, together with the driving rim 34, characterized by the fact that at least two individual driving rims 36, 38 are mounted in an elastically displaceable manner and side by side on a basic rim 34 and that the teeth 16 are mounted in the peripheral direction and in alternation so that each is situated on only one of the individual driving rims 36, 38.

6. Driving rim gear in accordance with Claim 5, characterized by the fact that the individual driving rims 36, 38 are mounted by their internal surface 40 on a corresponding outer surface 42 of the basic rim 34 and that rubber-encased cross bolts 44 are pressed into borings 50 provided in the plane of separation 48 between the individual driving rims 36, 38 and the basic rim 34.

7. Driving rim gear in accordance with Claim 5, characterized by the fact that the individual driving rims 36, 38 are provided, on their internal surface 40, with projections 52 which engage corresponding recesses 54 lined with rubber 5 and belonging to the basic rim 34.

8. Driving rim gear in accordance with Claim 5, characterized by the fact that a layer of rubber 58 is vulcanized in between the internal surfaces of the individual driving rims 38 and the basic rim 34.

9. Driving rim gear in accordance with Claim 5, characterized by the fact that the individual driving rims 36, 38 and the basic 34 have radial projections 60, 62 which engage one another and between which elastic elements 64 are provided in the peripheral direction.

10. Driving rim gear in accordance with one of Claims 5–6, characterized by the fact that rubber layers 66 are vulcanized in between the individual driving rims 36, 38.

## Revendications

1. Denture de *couronne d'entraînement* pour propulsion à chaîne avec des chaînes qui s'allongent élastiquement en charge, en particulier des chenilles de véhicules chenillés avec des boulons de chenilles logés élastiquement dans des tubes, réunis entre eux au moyen d'éléments de liaison, les dents (16) de ladite denture de couronne d'entraînement étant disposées sur la couronne d'entraînement (30) avec possibilité de déplacement élastique et où chacune des dents (16) comprend une tige (18) enrobée de caoutchouc qui s'engage dans un évidement (32) prévu à cet effet dans la couronne d'entraînement (30), caractérisée par le fait que la tige (18) s'étend radialement vers l'intérieur à partir du pied de la dent (16) et que la largeur de la dent (16) est au moins aussi grande que celle de l'évidement (32), qu'au pied de la dent il est prévu des avancées (20) dans le sens périphérique qui recouvrent l'évidement (32) et qu'à l'extrémité libre de la tige (18) il est prévu une semelle (22) qui recouvre l'évidement (32).

2. Denture de couronne d'entraînement selon la revendication 1, caractérisée par le fait que la tige (18) va en s'amincissant vers son extrémité libre.

3. Denture de *couronne d'entraînement* selon l'une des revendications 1 et 2, caractérisée par le fait que pour assurer une possibilité de remplacement plus facile des dents (16) la *couronne d'entraînement* (30) a une structure en forme de tambour et que les évidements (32) sont constitués par des rainures radiales, où s'engagent des renflements de forme convenables prévus sur un premier anneau de couronne d'entraînement (26) vissé sur le côté, et qu'il est prévu un deuxième anneau de couronne d'entraînement (28) vissé sur le côte qui, conjointement avec le premier anneau de couronne d'entraînement (26) bride et maintient les dents (16).

4. Denture de couronne d'entraînement selon la revendication 3, caractérisée par le fait que les anneaux de couronne d'entraînement (26, 28) sont réalisés en plusieurs parties.

5. Denture de couronne d'entraînement pour propulsion à chaîne avec des chaînes qui s'allongent élastiquement en charge, en particulier des chenilles de véhicules chenillés avec des boulons de chenilles logés élastiquement dans des tubes, réunis entre eux au moyen d'éléments de liaison, les dents (16) de ladite denture de couronne d'entraînement étant disposées sur la couronne d'entraînement (34) avec possibilité de déplacement élastique, caractérisée par le fait qu'il est prévu au moins deux couronnes d'entraînement individuelles (36, 38) disposées côte à côte avec possibilité de déplacement élastique sur une couronne de base (34) et que dans le sens périphérique les dents (16) sont disposées alternativement sur l'une ou sur l'autre des deux couronnes d'entraînement (36, 38).

6. Denture de couronne d'entraînement selon la revendication 5, caractérisée par le fait que par leur surface intérieure (40) les couronnes d'entraînement individuelles (36, 38) sont logées sur la surface extérieure correspondante (42) de la couronne de base (34) et que des tiges transversales (44) enrobées de caoutchouc sont insérées dans des forages (50) disposés dans la fente de séparation (48) entre les couronnes d'entraînement individuelles (36, 38) et la couronne de base (34).

7. Denture de couronne d'entraînement selon la revendication 5, caractérisée par le fait que sur leur surface intérieure (40) les couronnes d'entraînement individuelles (36, 38) présentent des éléments en saillie (52) qui s'engagent dans des évidements (54) garnis de caoutchouc (56) prévus à cet effet dans la couronne de base (34).

8. Denture de couronne d'entraînement selon la revendication 5, caractérisée par le fait qu'entre les surfaces intérieures des couronnes d'entraînement individuelles (38) et la couronne de base (34) est disposée une couche de caoutchouc (58) incorporée par vulcanisation.

9. Denture de couronne d'entraînement selon la revendication 5, caractérisée par le fait que les couronnes d'entraînement individuelles (36, 38) et la couronne de base (34) comportent des éléments (60, 62) en saillie dans le sens radial, qui s'imbriquent les uns entre les autres, et entre lesquels sont disposés des éléments (64) élastiques dans le sens périphérique.

10. Denture de couronne d'entraînement selon l'une des revendications 5 à 9, caractérisée par le fait que des couches de caoutchouc (66) incorporées par vulcanisation sont disposées entre les couronnes d'entraînement individuelles (36, 38).

FIG. 1

FIG. 2

FIG. 3

FIG. 4

36

16

34

36

36

34

FIG. 5

FIG. 6

38

16

34

16

38

34

FIG. 7

FIG. 8

FIG. 9

FIG. 10

FIG. 11

FIG. 12